# EUROPEAN PATENT APPLICATION

(11) **EP 2 700 742 A1**
(43) Date of publication of application: **26.02.2014**
(21) Application number: 13180534.3
(22) Date of filing: 15.08.2013
(51) Int. Cl.: D04H 3/115, A47G 9/00, B32B 5/26, D04H 13/00, A47G 9/02

(54) **Washable long-filament fiber quilt**

(30) Priority: 22.08.2012 JP 2012183609; 23.08.2012 CN 201210303220
(71) Applicant: Cai, Hong-Yuan, 970 Hualien City (TW)
(72) Inventor: Cai, Hong-Yuan, 970 Hualien City (TW)
(74) Representative: Rickard, David John

(57) **Abstract**

This invention is a long-filament fiber quilt, comprising of a long-filament fiber filling, which is made of stretched and stacked up long chemical filament fibers; a corresponding shell covering the filament fiber filling, and the edge of shell is fixed onto the edge of the long-filament fibers filling by at least one single stitching line sewed using a double needle which forms a stitching area; by means of, said long-filament fibers filling can be positioned within the shell without displacement, and long chemical filament fiber characterized by light and soft texture, excellent air permeability, high strength and high elasticity. The invention can be repeatedly washed and maintains its form and comfort, does not lend itself to be shifting and flattening after long-term use. Additionally the long chemical filament fiber is processed by a chemical softening treatment, leaving it soft and smooth to touch, and so having a comparable comfort to that of a silk duvet.

## Description

This invention relates generally to a washable long-filament fiber quilt, relates particularly to one kind of long-filament fibers filling positioned within the shell without displacement, and enables repeated washing without deformation, easy to wash and dries quickly, without the phenomena such as shifting or flattening even after long-term use, and the quality and comfort are comparable to that of silk, which has a great effect on reducing the cost of production.

### Background

In the light of, with the changing times, the requirements for a better quality of life is continuously increasing, modern people are too busy, leading to a negative effect to their sleep, for the pursuit of the good quality of sleep, thence more particularly with regards to the bedding supplies, as well as quilts for bedding are daily necessities of life. Nowadays quilts can be roughly classed into: chemical fiber quilt, silk duvet, down duvet and wool duvet, among them, only the chemical fiber quilt can be washed in washing machines in their home, and the chemical fiber has an advantage of a lower price, also characterized by light and soft texture, high-strength, high elasticity, wear-resistant, mildew control, pest control, is resistant to easy to wash, dries quickly, and has excellent air permeability, thus the chemical fiber quilt is widely used, it is also preferred on the market.

Hence, conventional chemical fiber is made of short chemical fibers, which is approximately a few centimeters in length, when it is stuffed into the quilt, by staggered irregularly short chemical fiber in order to make it fluffier, after placing it into the shell it is then complete. Thus, the aforementioned chemical quilt made of short chemical fiber will be fractured and separated from each other after long-term use, easily provoking the phenomena such as compaction affect after washing with water, causing loss of its fluffiness and elasticity, provoking the deformation of chemical fiber, thereby reducing its air permeability, softness, warmth and its number of years for usage

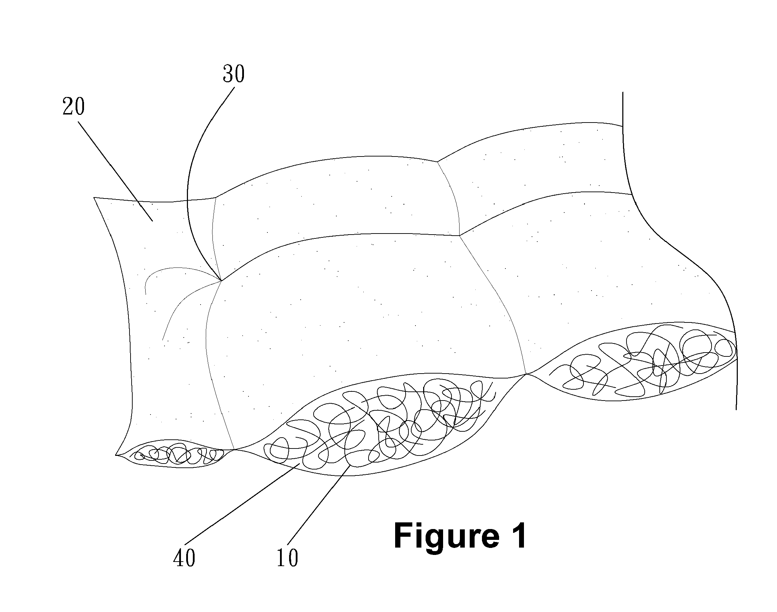

In addition, as shown in figure 1, conventional chemical fiber quilt is an assembled chemical fiber filling (10) made of short chemical fibers which are cut into lengths of a few centimeters, then stuffed into the interior of the shell (20), through stitching line (30) quilted with the shell (20), make a chamber (40) between the stitching line (30) and the shell (20), then stuff the chemical fibers filling (10) in the interior of the shell (20), thereby the aforementioned chemical fiber quilt is made. However, the chemical fiber filling (10) cannot be completely filled in the edge and corner of the shell (20), causing the user to not be aware of the sense of firmness when they using a chemical fiber quilt, also capacity to maintain warmth is reduced and will affect the quality of sleep for the user; due to the chemical fiber and the filling (10) being formed by irregularly staggered short chemical fibers, thus easy to break when forced whilst using it, for this reason, even the chemical fibers filling (10) is sutured, the chemical fibers filling (10) could be separated, unable to maintain homogeneous in the interior of the chamber (40), thus significantly reducing its appliance.

For these reasons, existing chemical fiber quilts have been investigated and improved with regards to this invention; it is designed in order to improve these issues. After spending a considerable amount of time on research, development and repeated testing, this invention is disclosed.

### GENERAL

The present invention preferaby resolves objections related to the conventional chemical fiber quilt made of short chemical fiber. The short chemical fiber could be fractured and separated from each other after long-term use, leading to the user to be unaware that the senses of firmness when they are using a chemical fiber quilt, also capacity to maintain warmth is reduced, will affect the quality of sleep for the user, to significantly reduce its applicability, and prone to the compaction phenomenon after washing with water, causing the loss of its fluffiness and its elasticity, thereby causing the deformation of chemical fiber, reducing its air permeability, softness, warmth and years of usage.

The inventor provides a washable long-filament fiber quilt, comprising, a long-filament fibers filling, which is made of stretched and stacked up long chemical filament fibers; and a shell, which corresponds and covers the long-filament fibers filling, moreover the edge of corresponding shell through quilting to fix it onto the edge of the long-filament fibers filling using at least a single stitching line.

With reference to the aforementioned washable long-filament fiber quilt wherein, firstly the shell is turned inside out, to make the inner surface of the shell face outwards, and sew to join the long-filament fibers filling with the edge of shell by single stitching line, then folded again to make the corresponding shell to cover the long filament fibers filling, stitched by a double stitching line to fix to the edge of the filament fibers filling onto the edge of the shell which forms a stitching area.

With reference to the aforementioned washable long-filament fiber quilt wherein, the shell is further fixed by the aforementioned stitching line sewed with the long-filament fibers filling, forming a multiple quilting section of the shell.

With reference to the aforementioned washable long-filament fiber quilt wherein, the lengthh of long chemical filament fibers is equivalent to the length of the shell.

With reference to the aforementioned washable long-filament fiber quilt wherein, each corner and the midpoint of length and width of the edge of the aforementioned shell, being respectively equipped with a ringed hook on each part.

With reference to the aforementioned washable long-filament fiber quilt wherein, the long chemical filament fiber is processed by a chemical softening treatment.

With reference to the aforementioned washable long-filament fiber quilt wherein, the long chemical filament fiber is processed by a heat-setting treatment.

With reference to the aforementioned disposition, the invention takes advantage of long chemical filament fibers characterized by light and soft texture, excellent air permeability, high strength and high elasticity, and the long chemical filament fiber previously processed by a chemical softening treatment with silicon. Thus the invention gives the material a softer and smoother touch, texture and warmth which is comparable to that of silk, enabling the replacement of silk in order to reduce costs. Furthermore, the shell covering the long-filament fiber filling then fixing to the edge of the long-filament fibers filling by stitching line. Additionally the quilting is done in order to fix the long-filament fibers filling positioned within the shell without displacement. The chemical long-filament fiber characterized by high strength and high elasticity characteristics, it is not easily broken when forced whilst using it, the long-filament fibers filling constructed by stacking up long stretched chemical filament fiber, thus, this invention is fluffy and is elastic in nature, remain the performance features such as fluffiness after long-term use, resistant over time. Additionally, among them, each corner and the midpoint of the length and width of the edge of the aforementioned shell are equipped with a ringed hook, thus that this invention remains in a stable position in the quilt cover, during the use of this invention, giving a sense of firmness, comfort, and warmth. This invention equally is processed to prevent shrinkage after washing with water, it offers the user the ability to wash it in your home washing machine, easy to wash and dries quickly, the long chemical filament fiber does not have the phenomena such as compaction affect, shrinkage after washing with water, resolves the disadvantage of conventional types of short chemical fiber quilt which can be quite easily deformed and shrink after washing with water, as well as the disadvantage of silk which is not washable with water. There is a clear indication that, the invention of simple structure, convenient to use, and possesses the effect of a wide range of applicability.

### BRIEF DESCRIPTION OF THE DRAWINGS

Figure 1 is a schematic diagram view of the structure of a conventional chemical fiber quilt.

Figure 2 is a schematic diagram view of this invention.

Figure 3 is a schematic sectional view of this invention A-A shown in Figure 2.

Figure 4 is a schematic diagram of the invention shows that the shell is turned inside out and a plastic sheet is placed on top.

Figure 5 is a schematic diagram of this invention shows that the long-filaments fiber filling is positioned on the shell, and then stitched by a stitching line using a single needle.

Figure 6 is a schematic diagram of this invention shows that the shell is fixed with the long-filament fibers filling, then again placing another plastic sheet.

Figure 7 is a schematic diagram of the invention shows once more that the corresponding shell covering the long-filament fibers filling is turned back outside.

### DETAILED DESCRIPTION

This invention particularly relates to a washable long-filament fiber quilt. Its means of implementation mode, characteristics and efficiency will be disclosed in detail by various realizations of implementation as shown in the following examples.

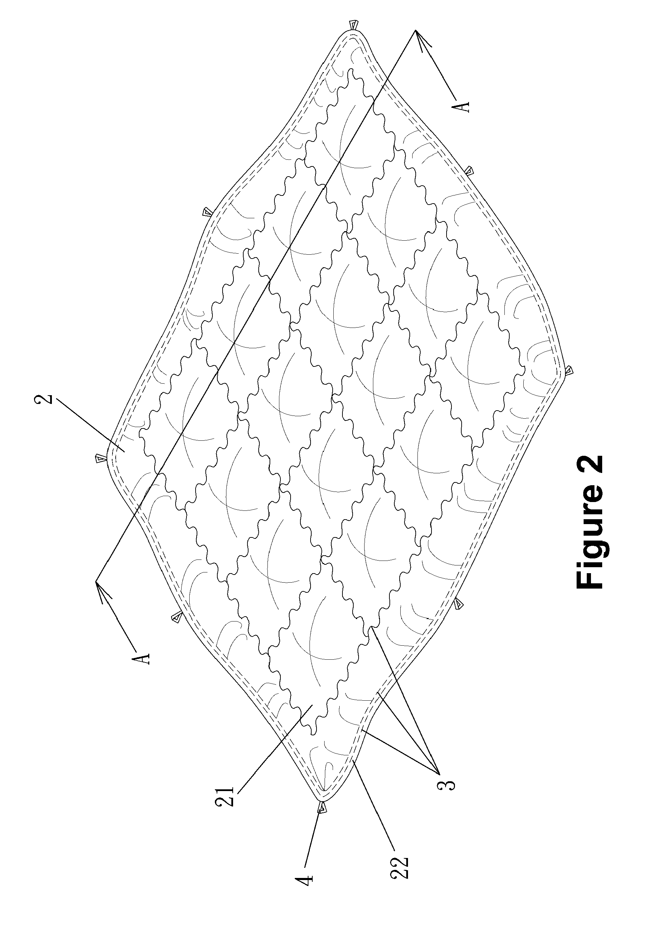

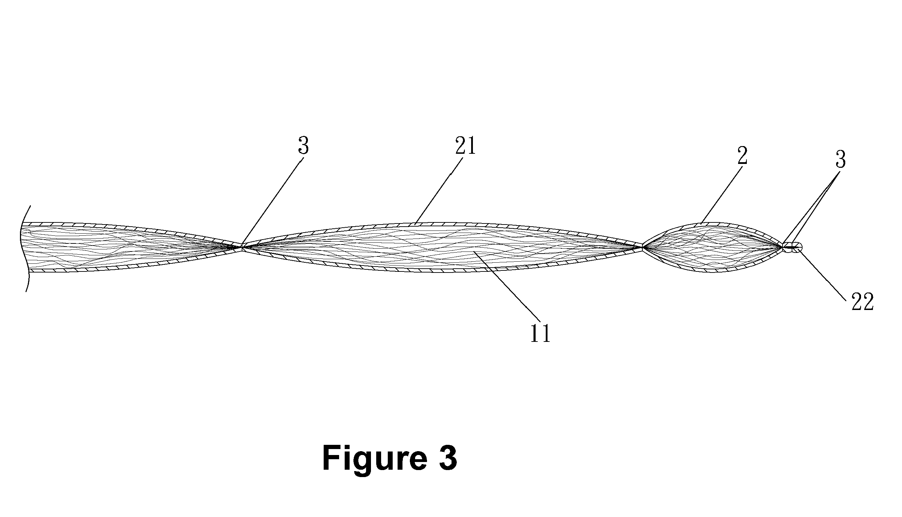

First, please refer as shown in the Figure 2 and Figure 3, this invention is a washable long-filament fiber quilt, comprising:

a long-filament fiber filling (1), wherein is formed by stretching and stacking up the long chemical filament fibers (11), the aforementioned long chemical filament fiber (11) is made using silicone during a chemical process and softening treatment, and the long chemical filament fiber (11) processed by a heat-setting treatment,

a shell (2), corresponding and covering the long filament fibers filling (1), the length of the long chemical filament fiber (11) is equal to the length of the shell (2), and the edge of corresponding shell through at least a single stitching line (3) sewed onto the edge of long-filament fibers filling (1) to form a stitching area (22), and fixed by stitching it onto the long- filament fibers filling (1), and forms a multiple quilting section (21) on the surface of the shell (2), each corner and the midpoint of the length and width of the edge of the aforementioned shell (2) is equipped with a ringed hook on each part, which allows the user to tie it up with the fixed rope of the cover sheet sold on the market.

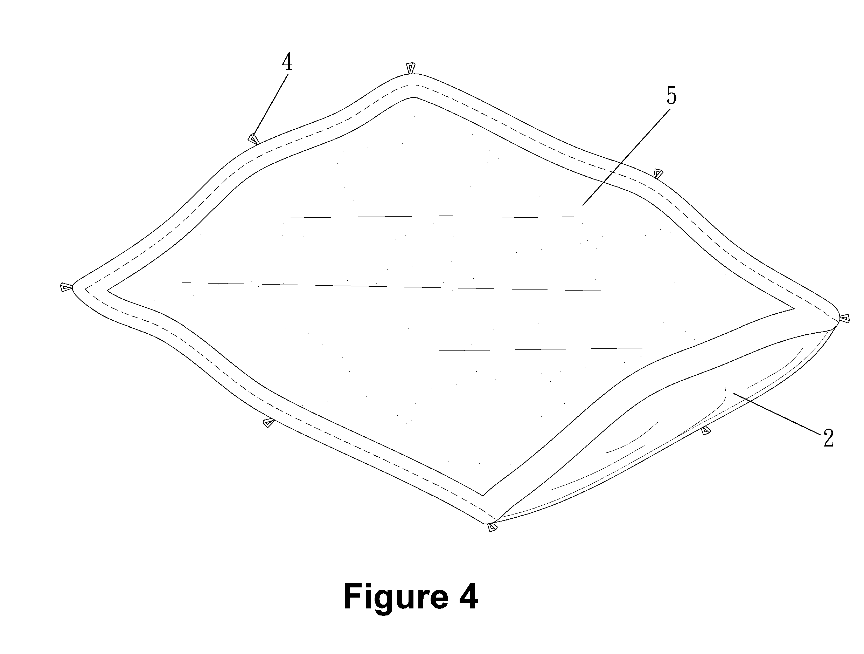

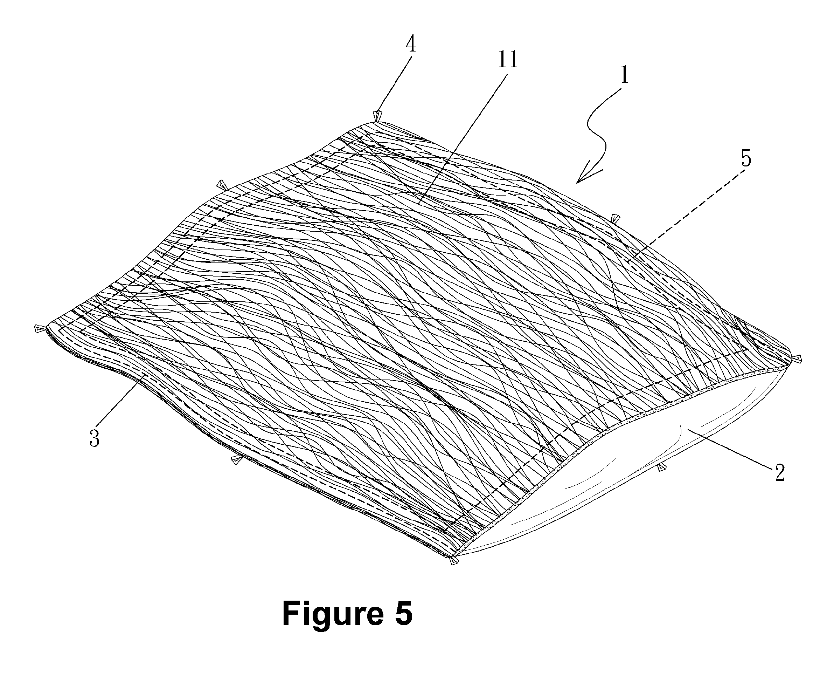

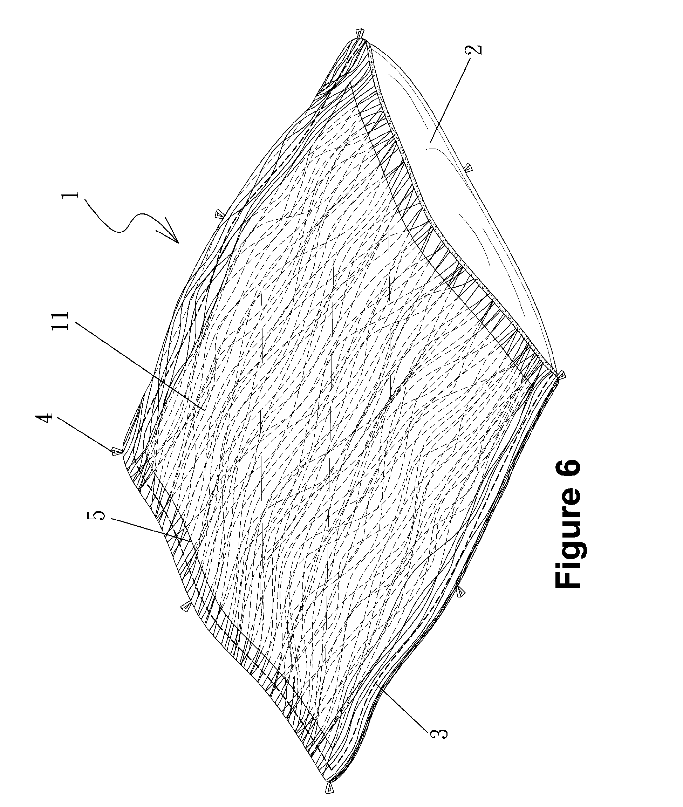

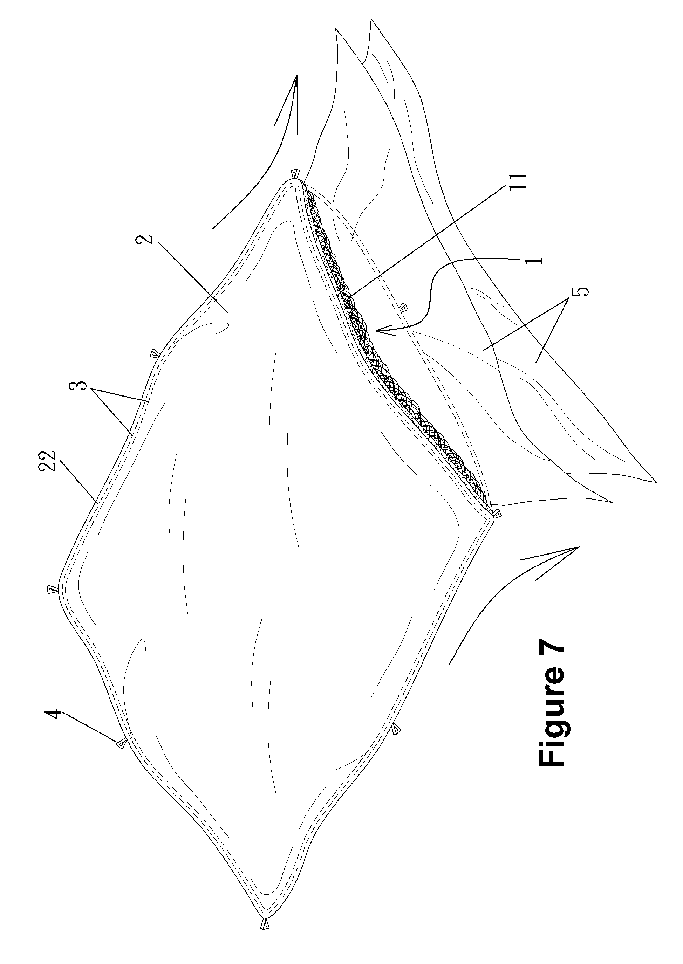

The implementation mode of this invention as follows, first treating the chemical long-filament fiber (11) using a chemical softening treatment with silicone, the aforementioned chemical long-filament fiber (11) having previously had further treatment by heat treatment or chemical deformation to further enhance stability to the inner fiber of the long-filament fiber (11), through several pre-shrinking treatments, in order to prevent the deformation of long chemical filament fiber (11) after washing with water, then set margin of shrinkage, for example, to make the invention for a size of 180 × 210 cm², the chemical long-filament fiber (11) will be cut to the identical length as the shell (2), if needed to preserve the margin for shrinkage, the chemical long-filament fiber (11) will be cut to 186 × 216 cm²; while after stretching and stacking the aforementioned long chemical filament fiber (11) then set up to form the long-filament fibers filling (1), subsequently please refer as shown from Figure 2 to Figure 7, make the shell (2) as well as an empty chamber with an opening, afterwards the inner surface of the shell (2) is turned inside out and a plastic sheet is placed (5) on the surface of shell (2), and then the long-filament fibers filling (1) is positioned then the assembly of the edge of the aforementioned long-filament fibers filling and the shell is stitched using a single needle with a stitching line (3), and then place another plastic sheet (5) on the surface of the long-filament fiber filling (1), once more the corresponding shell (2) covering the long-filament fibers filling (1) is turned back outside . The plastic sheet is used to prevent tangling of chemical fiber filament (11) whilst it is turned back around, immediately removing the aforementioned plastic sheet (5) after the long-filament fibers filling (1) is covered by the corresponding shells covering then closing the opening, afterwards fixing the edge of the shell (2) and the long-filament fibers filling by stitching line (3) using a double needle to form the stitching area (22), fixing the aforementioned long-filament fibers filling (1) by quilting (21), to form the multiple quilting section on the surface of the shell (2), thereby it is completed as shown in Figure 2 of the drawings.

As the above description and disposition shows, this invention has certain advantages and details of efficiency as follows:

1. The long filament fibers filling (1) is made of long chemical filament fibers (11) formed by being stretched and stacked up. Additionally, the long chemical filament fiber (11) characterized by a light and soft texture, excellent air permeability, high strength and high elasticity, without shifting or flattening even after long-term use. It is not easily broken by when forced whilst using it after the positioning, it permits the ability to wash it in your home washing machine without phenomena such as compaction affect, easy to wash and dries quickly, this increases the duration of use, enhances the characteristic of the convenience of cleaning.

2. The long chemical filament fiber processing previously by chemical softening treatment with silicon. This invention gives the material a softer and smoother touch, texture and warmth which is comparable and enables the replacement of a silk duvet, the costs of production is lower than that of the raw material for silk, as well as the silk duvet which is not washable with water. It is evident that this invention has a great effect on reducing the cost of production, and at the same time offers excellent comfort and an advantageous effect by being easy to clean.

3. The long chemical filament fiber (11) processed a heat-setting treatment, prevents the deformation of the long chemical filament fiber (11) causing shrinkage, which in itself enhances the durability and suitability of the invention.

4. The long-filament fiber filling (1) is stitched and fixed by stitching line (3) using a double needle around the edge of shell (2) and the edge of the long-filament fibers filling to form said stitching area (22), it permits the long-filament fibers filling (1) to be positioned in each corner of the interior of shell (2), without displacement during ones sleep or washing, allows the user to be aware of the senses of firmness and warmth during their sleep.

5. The long-filament fiber filling (1) is quilting by stitching line (3), also to form a multiple quilting section (21) onto the surface of the shell (2), further enables the stabilization of the aforementioned long-filament fibers filling (1) without displacement when forced whilst using it . Furthermore, enhance the beautiful appearance by multiple stitching sections (21) which is created by the arrangement of the stitching lines, to increase the decorative effect, to attract the attention of consumers.

6. The invention is equipped with ringed hooks (4), which allow the user to tie it up with the fixed rope of the cover sheet sold on the market. The cover sheets sold on the market are usually equipped the fixed ropes, therefore allowing the tying up with the ringed hooks (4), it permits that this invention positioned onto interior of the cover sheet without displacement, allowing the user to be aware the senses of firmness and warmth during their sleep.

7. This invention is made of long-filament fiber, which does not form breakpoints such as the short chemical fiber, the long-filament fiber does not pierce through the sheet, in order to prevent any molestation to the users breathing whilst asleep, thus providing users with restful sleep, allows the user to be aware of a warm and comfortable sensation during their sleep.

To summarize the description above, the technical implementation disclosed enables this invention to resolve the problems of related art, and indeed up to the intended purpose of efficiency, without any identical publication or that has been shown before filing, also with a substantial progression. Its overall structure, indeed correctly comply with the requirement of the patent law. The Applicant respectfully submits a new patent application in accordance with the law. Please accord this application an invention patent.

However, as mentioned above, there are several preferred implementations of the invention rather than restrictive, it cannot be used as a limited field for this invention. Generally, this invention patenting the field and content of considerable modifications, changes, or equivalencies can be made within the field of the claims.

### LIST OF REFERENCE NUMBERS

List of Reference Numbers of Related Art

10 Chemical fiber filling

20 Shell

30 Stitching line

40 Chamber

List of Reference Numbers of The Invention

1 Long-filament fibers filling

11 Long chemical filament fiber

2 Shell

21 Quilting section

22 Stitching area

3 Stitching line

4 Ringed hook

5 Plastic sheet

## Claims

1. A washable long-filament fiber quilt, comprising:
a shell defining an interior and including a first end, a second end opposite the first end, a third end, and a fourth end opposite the third end, the first end extending in a first direction and the third end extending in a direction transverse to the first direction;
a plurality of filament fibers in the interior of the shell, each filament fiber including a first end attached at the first end of the shell, and a second end attached at the second end of the shell;
a first plurality of stitching line structures extending in the first direction; and
a second plurality of stitching line structures extending in a direction transverse to the first direction,
whereby the first and second plurality of stitching line structures divide the interior of the shell into a plurality of compartments, and each filament fiber traverses multiple compartments.

2. A washable long-filament fiber quilt according to claim 1 wherein firstly the shell is turned inside out, to make the inner surface of the shell face outwards, and sewed to join the long-filament fibers filling with the edge of shell by the stitching line using a needle, then turned again to make the corresponding shell covering the long filament fibers filling, sewed using the stitching line using a double needle to fix the edge of the filament fibers filling onto the edge of the shell which forms said stitching area.

3. A washable long-filament fiber quilt according to claim 1 or claim 2
wherein a length of the plurality of filament fibers is equivalent to a length of the shell.

4. A washable long-filament fiber quilt as claimed in any one of claims 1 to 3 wherein each corner and the midpoint of length and width of the edge of the aforementioned shell, is respectively equipped with a ringed hook on each part.

5. A washable long-filament fiber quilt as claimed in any one of claims 1 to 4 wherein the plurality of filament fibers is processed by a chemical softening treatment.

6. A washable long-filament fiber quilt as claimed in any one of claims 1 to 5 wherein the plurality of filament fibers is made using silicone during a chemical processing and softening treatment.

7. A washable long-filament fiber quilt as claimed in any one of claims 1 to 4 wherein the plurality of filament fibers is processed by a heat-setting treatment.

8. A washable long-filament fiber quilt as claimed in any one of claims 1 to 7 wherein each filament fiber traverses 4 compartments.
